# EUROPEAN PATENT SPECIFICATION

(11) **EP 2 902 273 B1**
(45) Date of publication and mention of the grant of the patent: **18.05.2016**
(21) Application number: 14185028.9
(22) Date of filing: 16.09.2014
(51) Int. Cl.: B60R 22/26, B60N 2/48

(54) **Passenger seat for vehicles**
Fahrgastsitz für Fahrzeuge
Siège pour véhicules de passagers

(30) Priority: 30.01.2014 TR 201401042
(43) Date of publication of application: 05.08.2015
(73) Proprietor: BRUSA Koltuk ve Ic Trim Teknolojileri Sanayi ve Tiaret A.S., 16159 Nilüfer/Bursa (TR)
(72) Inventor: Tuna, Günnur, Bursa (TR)
(74) Representative: Habermann, Hruschka & Schnabel

(56) References cited:
- US-A- 3 471 197
- US-A- 5 390 982
- US-A- 5 848 661
- US-A1- 2004 036 270

## Description

The present invention relates to a passenger seat for vehicles, in particular for buses, minibuses and other public transport vehicles.

Nowadays it is required also for buses that the passenger seats, which are used for that usually as standardized series, must be provided with a seat belt mechanism for safety purposes.

Two types of seat belt mechanisms are presently utilized for public transport vehicles. For a so-called two-point belt mechanism the seat belt is arranged at level of the waist of a passenger and wrapped around it and fastened accordingly. Such seat belt mechanisms are e.g. also known from airplanes. A more comfortable mechanism is provided by the so-called three-point belt mechanism, as commonly known from passenger cars, which comprise a redirector component at about the shoulder level of the passenger, so that an additional belt can cross the chest of the passenger diagonally and lock at waist line.

While in passenger cars the passenger can adapt the seat belt mechanism individually to his needs, often nowadays supported by motor-driven adjustment apparatus, such individual adaption proves to be difficult for vehicles which comprise several uniformly shaped and configured seats such as in buses.

In the systems as currently utilized in this context, it is not possible to easily and, comfortably adjust the entire seat belt mechanism to the anatomical specifications of individual passengers, as the redirector component for the belt is always arranged at the same position of the standardized seats. Accordingly, for small passengers the third point, i.e. the position of the redirector, is located and often stays located above the shoulder level of the passenger so that the seat belt is not able to cross the chest of the passenger properly and comfortably enough with the additional drawback that the seat belt might not tighten as necessary in case of emergency. On the contrary, for very tall persons the third point stays below the shoulder level, which could lead to the effect that the seat belt will be tightened more than necessary. In both cases, there is the risk of injuries for the passengers due to the inadequate height adjustment possibilities for the seat belt.

In the prior art, TR 2007/06008 e.g. discloses a seat belt mechanism which allows for adjustment at shoulder level. Inclined surfaces of the redirecting mechanism are placed at both sides of the passenger seat and can be moved linearly up and down. Although this seat belt mechanism proves to function in a stable manner, it is cumbersome to handle especially for elder people and children without the necessary skills and knowledge. Therefore, the seat belt mechanism will not be adjusted by such persons properly leading to a substantial safety risk.

Furthermore, TR 2011/00401 suggests a seat belt mechanism, in which a bracket for guidance of the seat belt can be arranged at a selected height at the side of the passenger seat. In order to avoid that the seat belt will be directed to the shoulder level of children or shorter passengers, which could injure the neck, the bracket must be assembled and disassembled manually at the assembling points as provided in order to adjust the proper height in advance before being used, for which the seat foam and seat fabric cloth have to be partially removed, leading to costly additional service time. The major drawback, however, is that the seat belt mechanism can not adapt to different anatomic specifications of passengers while the vehicle is in use.

From US 5,390,982 a seat according to the preamble of claim 1 is known in which height adjustment of the seat belt to be pulled out from a headrest over the shoulder of a passenger is realized by raising or lowering the headrest as such.

As a result, for commonly used passenger seats of standardized configuration and size, passengers who are taller or shorter than the average height can not be seated in very comfortable positions. In addition, a non-properly fit seat belt is associated with security risks, especially for shorter persons or children in case of accidents.

Based on that it is an objective of the present invention to provide a passenger seat for vehicles which overcomes the afore-mentioned disadvantages, which is easy to assemble and handle and which is cost-efficient in manufacture and maintenance.

Such objective is solved by a passenger seat according to claim 1 and a vehicle comprising corresponding passenger seats according to claim 10.

The invention suggests a passenger seat for vehicles comprising a seat frame structure with a headrest and a seat section, in which the frame structure comprises a seat belt mechanism providing a seat belt laterally to the backrest of the frame structure. A seat belt retractor or pretensioner of the seat belt mechanism is arranged inside the headrest in a swiveling manner, in which the headrest comprises a lateral opening and a belt guiding tray being arranged between the seat belt retractor and the lateral opening.

The swiveling arrangement according to the invention allows for any free angular position of the retractor and thus angular direction of the seat belt to be pulled out by a passenger, while the seat belt is properly guided by the belt guiding tray.

A passenger can pull out the seat belt and adapt the position of it in accordance with his height and in particular his shoulder level, while the seat belt retractor will simply take an angular position depending on the pulling forces as applied by the passenger and then as fixed in the knuckle, while at the same time additional support for the seat belt with respect to guidance during pulling out on the one hand and during tightening of the seat belt in case of need on the other is provided by the belt guiding tray. The seat belt mechanism is thus self-adjusting.

Accordingly, the seat belt retractor is arranged so as to allow a swivel or pivoting motion at least around an axis which is perpendicular to the longitudinal extension of the seat belt. Furthermore, the belt guiding tray is arranged in relation to the seat belt retractor so as to allow different heights for the seat belt to be pulled out by a passenger.

In order to allow smooth passage of the seat belt, the belt guiding tray is levelled. Moreover, so to allow a smooth pulling process and positioning of the seat belt as the passenger desires, in particular if we speak of smaller persons, the belt guiding tray could be further formed to be inclined and curved downwardly and/or to be inclined and curved towards the passenger, i.e. being slightly directed towards the front seating surface of the passenger seat.

According to a specific embodiment, the belt guiding tray could be arranged inside the headrest in a swiveling manner as well so as to move together with the seat belt retractor, which eases the handling still further.

In order to provide an easy mounting of the seat belt mechanism, the headrest comprises at least one mounting plate which is arranged inside the headrest and which comprises a swivel joint for mounting the seat belt retractor. The swivel joint could be a rod or bolt or similar, which is pivotally arranged at the mounting plate and which supports the seat belt retractor pivotably.

Furthermore, the mounting plate could comprise a series of openings for the swivel joint to allow angular adaptation between the seat belt retractor and the mounting plate during assembly.

Both mounting plate and seat belt retractor being pivotally attached thereto can be handled and provided as one mounting unit and inserted into and mounted inside the headrest, while the mounting plate serves as an additional means to reinforce the frame of the headrest.

The passenger seat according to the invention provides an easy to handle seat belt mechanism which allows passengers to automatically adjust the height of the seat belt to be pulled out from the headrest in relation to the individual shoulder levels with at the same time full wrapping around the chest thereby enabling a comfortable and safe sitting position of the passengers.

Since according to the invention the retractor of the seat belt mechanism is mounted in a swiveling manner, the pull-out direction of the seat belt can be angularly adjusted without the provision of any extra components for height adjustment while at the same time the seat belt is safely and smoothly guided by means of the belt guiding tray.

Furthermore, according to the invention the frame of the headrest shall be formed in such a way, i.e. the struts and reinforcement components of it shall be arranged in such a way so as to allow the mounting of the seat belt retractor and the belt guiding tray to both sides of the frame equally. Thus, one uniformly configured passenger seat can be equipped with a seat belt mechanism at either the left or right side of the seat depending on the mounting position of the passenger seat within the vehicle, thereby always using the same components, which reduces manufacturing costs substantially.

In its entirety, the seat belt mechanism as employed in a passenger seat according to the invention utilizes a minimum of components to achieve the automatic height adjustment, which reduces manufacturing and installation costs. Also, costs for maintenance and repair will be kept to a minimum.

The passenger seat according to the invention is mainly intended for public mass transportation vehicles such as buses. It could, however, also be used for trains, planes or even passenger cars.

Further advantages and features shall become apparent from the following description of the embodiments as shown in connection with the accompanied drawings, in which
- Fig. 1: schematically shows an explosive, perspective view from the rear of a first embodiment of a passenger seat according to the invention;
- Fig. 2: schematically shows an explosive, perspective view from the front of the first embodiment of a passenger seat according to the invention;
- Fig. 3: shows a headrest of the passenger seat with a seat belt in an upper position;
- Fig. 4: shows the headrest of the passenger seat with the seat belt in a lower position; and
- Fig. 5: schematically shows a perspective view from the rear of a second embodiment of a headrest of a passenger seat according to the invention.

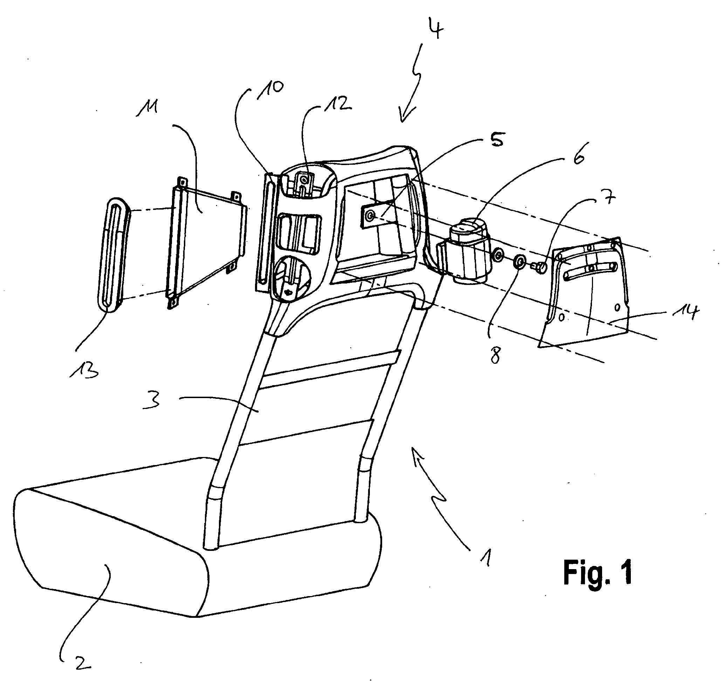

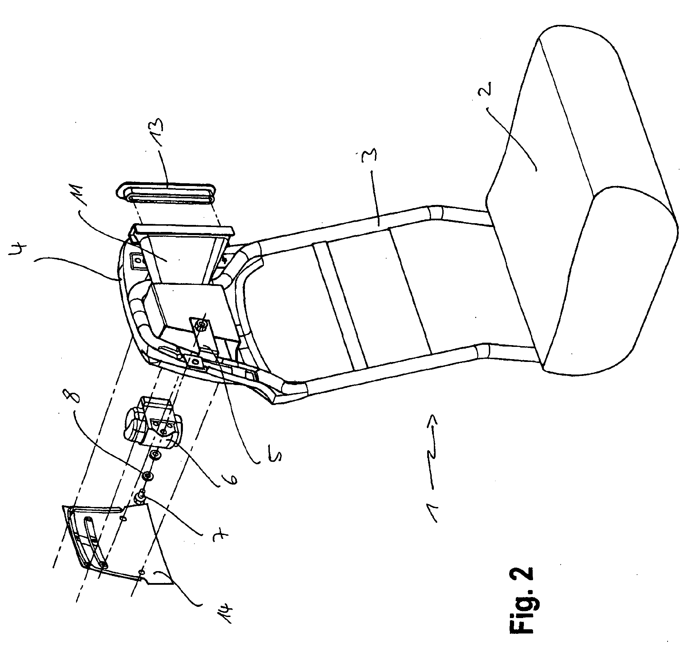

In Fig. 1 a first embodiment of a passenger seat according to the invention is shown, in which the single components are shown in an explosive view from the rear, whereas Fig. 2 show the same passenger seat from the front.

The passenger seat basically consists of a seat frame structure 1, e.g. made from metal or plastic struts, which seat frame structure 1 comprises a seat section 2, a backrest 3 and a headrest 4 being attached, preferably in a fixed connection, on top of the backrest 3. For ease, the fabric and the upholstery of the passenger seat are not shown in these views.

As can be seen both from Fig. 1 and Fig. 2, the headrest 4 is basically hollow and comprises a mounting structure 5 in the form of a plate, which freely extends into the interior of the headrest 4.

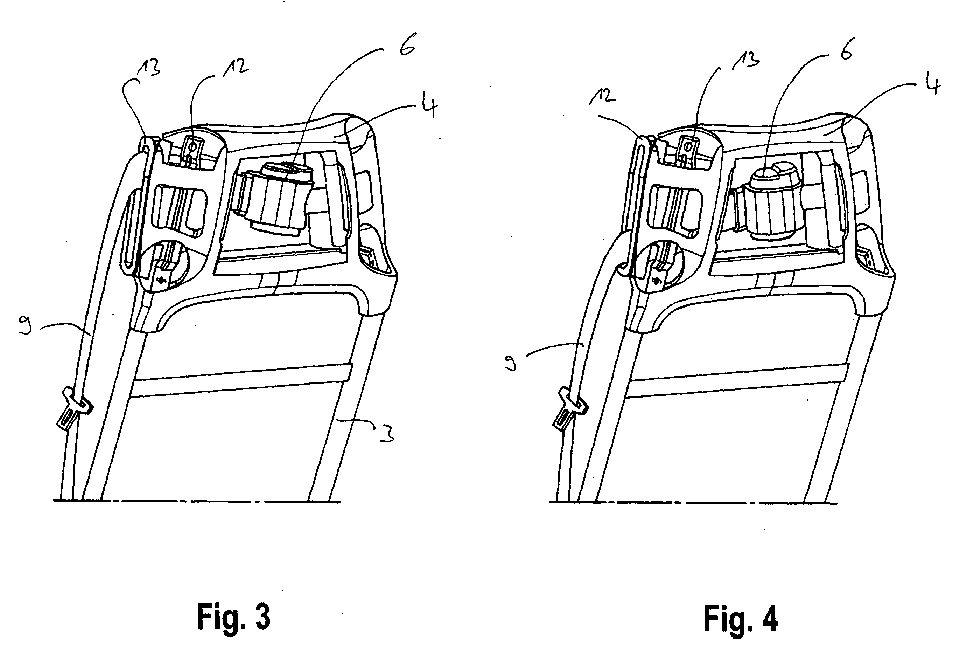

A retractor 6 of a seat belt mechanism will be mounted to the mounting plate 5 by means of a bolt 7 forming a swivel joint, so that the retractor 6 is freely supported at the mounting plate 5 to angularly pivot around the bolt 7 being received by corresponding bushings 8 or similar, i.e. in a direction perpendicular to the longitudinal extension of a seat belt 9, as shown in Figs. 3 and 4.

The headrest 4 comprises a lateral opening 10 into which a belt guiding tray 11 opens, which belt guiding tray 11 is arranged between the retractor 6 and the lateral opening 10. For that the frame of the headrest 4 comprises a longitudinal support 12, at which the belt guiding tray 11 is fixed to. To the outside, the belt guiding tray 11 opens by means of a guide slit 13.

As can be seen particularly from all Figs., the belt guiding tray 11 is flat, when seen perpendicular to the longitudinal surface extension of the seat belt 9, and opens angularly to the outside so as to allow the guiding of the seat belt 9 in all possible angular position ranging from an upper angular position (Fig. 3) to a lower angular position (Fig. 4), so as to enable adjustment of the height of the pull-out working position of the seat belt 9 as desired by the passenger.

The headrest 4 opens to the rear and will be closed by a back cover 14, which closes the interior of the headrest 4. By that the seat belt mechanism with the retractor 6 is freely accessible for installation, maintenance and repair without the need to remove the fabric and/or upholstery of the passenger seat which eases the assembly and keeps the costs low.

As can be seen from Figs. 3 and 4, the seat belt 9 always adjusts to the desired angular positions in response to the pulling force as applied by the passenger in accordance with the shoulder height level so as to automatically adapt thereto due to the pivoting movement of the retractor 6 as enabled by the freely swiveling mounting of it within the headrest 4.

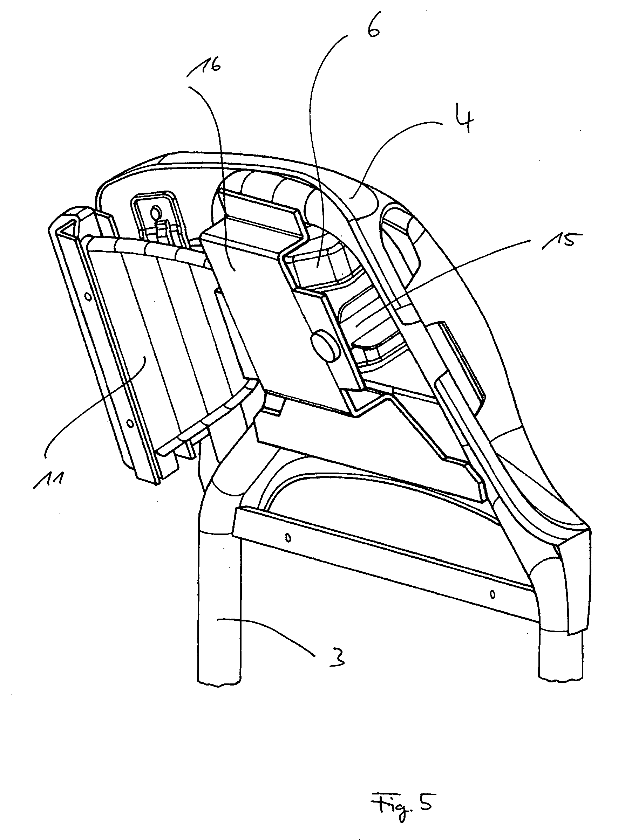

Fig. 5 shows a second embodiment of a headrest of a passenger seat according to the invention.

The retractor 6 is pivotably arranged by means of a joint axis 15, which is mounted on a mounting plate 16.

The mounting plate 16 is formed in such a way so as to extend substantially over the height of the headrest 4 so as to additionally serve as reinforcement means for the same.

## Claims

1. Passenger seat for vehicles comprising a seat frame structure (1) with a headrest (4) and a seat section (2), in which the frame structure (1) comprises a seat belt mechanism providing a seat belt (9) laterally to a backrest (3) of the frame structure (1), **characterized in that** a seat belt retractor (6) of the seat belt mechanism is arranged inside the headrest (4) in a swiveling manner and that the headrest (4) comprises a lateral opening (10) and a belt guiding tray (11) being arranged between the seat belt retractor (6) and the lateral opening (10).

2. Passenger seat of claim 1, in which the seat belt retractor (6) is arranged so as to allow a swivel motion at least around an axis which is perpendicular to the longitudinal extension of the seat belt (9).

3. Passenger seat of claim 1 and 2, in which the belt guiding tray (11) widens from the seat belt retractor (6) towards the lateral opening (10) so as to allow different heights for the seat belt (9) to be pulled out by a passenger.

4. Passenger seat of claim 3, in which the belt guiding tray (11) is levelled so as to allow a flat guiding of the seat belt (9).

5. Passenger seat of claim 3 or 4, in which the belt guiding tray (11) is formed to be inclined and curved downwardly and/or to be inclined and curved towards the passenger.

6. Passenger seat of claim 3, in which the belt guiding tray (11) is arranged inside the headrest (4) in a swiveling manner so as to move with the seat belt retractor (6).

7. Passenger seat of one of claims 1 to 6, in which the headrest (4) comprises a mounting plate (5; 16) being arranged inside the headrest (4), which mounting plate (5;16) comprises a swivel joint (7,8;15) for mounting the seat belt retractor (6).

8. Passenger seat of claim 7, in which the mounting plate (5;16) comprises a series of openings for the swivel joint (7, 8; 15) to allow angular adaptation between the seat belt retractor (6) and the mounting plate (5;16).

9. Passenger seat of one of claim 1 to 8, in which a frame of the headrest (4) is formed to allow mounting of the seat belt retractor (6) and the belt guiding tray (11) to both sides of the frame equally.

10. Vehicle, in particular for mass transport of people, comprising passenger seats of claims 1 to 9.

## Patentansprüche

1. Fahrgastsitz für Fahrzeuge aufweisend eine Sitzrahmenstruktur (1) mit einer Kopfstütze (4) und einem Sitzabschnitt (2), wobei die Rahmenstruktur (1) einen Sitzgurtmechanismus aufweist, der seitlich an einer Rückenlehne (3) der Rahmenstruktur (1) einen Sitzgurt (9) zur Verfügung stellt, **dadurch gekennzeichnet, dass** eine Aufrollvorrichtung (6) für den Sitzgurt des Sitzgurtmechanismus im Inneren der Kopfstütze (4) in einer schwenkbaren Art und Weise angeordnet ist und dass die Kopfstütze (4) eine seitliche Öffnung (10) aufweist und dass ein Gurtführungsschacht (11) zwischen der Aufrollvorrichtung (6) für den Sitzgurt und der seitlichen Öffnung (10) angeordnet ist.

2. Fahrgastsitz nach Anspruch 1, bei dem die Aufrollvorrichtung (6) für den Sitzgurt derart angeordnet ist, dass eine Schwenkbewegung zumindest um eine Achse gestattet ist, die senkrecht zu der Längserstreckung des Sitzgurtes (9) ausgerichtet ist.

3. Fahrgastsitz nach Anspruch 1 und 2, bei dem sich der Gurtführungsschacht (11) von der Aufrollvorrichtung (6) für den Sitzgurt in Richtung zu der seitlichen Öffnung (10) aufweitet, um unterschiedliche Höhen zum Herausziehen des Sitzgurtes (9) durch einen Fahrgast zu gestatten.

4. Fahrgastsitz nach Anspruch 3, bei dem der Gurtführungsschacht (11) ebenförmig ausgestaltet ist, um eine flache Führung des Sitzgurtes (9) zu gestatten.

5. Fahrgastsitz nach Anspruch 3 oder 4, bei dem der Gurtführungsschacht (11) ausgestaltet ist, so dass er nach unten geneigt und gekrümmt und/oder zu dem Fahrgast hin geneigt und gekrümmt ist.

6. Fahrgastsitz nach Anspruch 3, bei dem der Gurtführungsschacht (11) im Inneren der Kopfstütze (4) derart in einer schwenkbaren Art und Weise angeordnet ist, dass er sich mit der Aufrollvorrichtung (6) für den Sitzgurt bewegen kann.

7. Fahrgastsitz nach einem der Ansprüche 1 bis 6, bei dem die Kopfstütze (4) eine Halteplatte (5;16) aufweist, die im Inneren der Kopfstütze (4) angeordnet ist, wobei die Halteplatte (5;16) ein Drehgelenk (7,8;15) zur Montage der Aufrollvorrichtung (6) für den Sitzgurt aufweist.

8. Fahrgastsitz nach Anspruch 7, bei dem die Halteplatte (5;16) eine Reihe von Öffnungen für das Drehgelenk (7,8;15) aufweist, um eine Winkelanpassung zwischen der Aufrollvorrichtung (6) für den Sitzgurt und der Halteplatte (5;16) zu gestatten.

9. Fahrgastsitz nach einem der Ansprüche 1 bis 8, bei dem ein Rahmen der Kopfstütze (4) ausgebildet ist, um eine Montage der Aufrollvorrichtung (6) für den Sitzgurt und des Gurtführungsschachts (11) gleichförmig zu beiden Seiten des Rahmens zu gestatten.

10. Fahrzeug, insbesondere für einen Massentransport von Personen, aufweisend Fahrzeugsitze gemäß den Ansprüchen 1 bis 9.

## Revendications

1. Siège passager pour véhicules, comprenant une structure de cadre de siège (1) présentant un appui-tête (4) et une section de siège (2), dans lequel la structure de cadre (1) comprend un mécanisme de ceinture de siège qui installe une ceinture de siège (9) latéralement sur un dossier (3) de la structure de cadre (1), **caractérisé en ce qu'**un rétracteur de ceinture de siège (6) du mécanisme de ceinture de siège est agencé à l'intérieur de l'appui-tête (4) d'une façon articulée et **en ce que** l'appui-tête (4) comporte une ouverture latérale (10), et un plateau de guidage de ceinture (11) est agencé entre le rétracteur de ceinture de siège (6) et l'ouverture latérale (10).

2. Siège passager selon la revendication 1, dans lequel le rétracteur de ceinture de siège (6) est agencé de manière à permettre un mouvement articulé au moins autour d'un axe qui est perpendiculaire à l'étendue longitudinale de la ceinture de siège (9).

3. Siège passager selon les revendications 1 et 2, dans lequel le plateau de guidage de ceinture (11) s'élargit à partir du rétracteur de ceinture de siège (6) en direction de l'ouverture latérale (10) de manière à permettre à un passager de régler différentes hauteurs de la ceinture de siège (9).

4. Siège passager selon la revendication 3, dans lequel le plateau de guidage de ceinture (11) est aplani de manière à permettre un guidage plat de la ceinture de siège (9).

5. Siège passager selon la revendication 3 ou 4, dans lequel le plateau de guidage de ceinture (11) est formé de manière à être incliné et courbé vers le bas et/ou de manière à être incliné et courbé en direction du passager.

6. Siège passager selon la revendication 3, dans lequel le plateau de guidage de ceinture (11) est agencé à l'intérieur de l'appui-tête (4) d'une façon articulée de manière à se déplacer avec le rétracteur de ceinture de siège (6).

7. Siège passager selon l'une quelconque des revendications 1 à 6, dans lequel l'appui-tête (4) comprend une plaque de montage (5 ; 16) qui est agencée à l'intérieur de l'appui-tête (4), ladite plaque de montage (5 ; 16) comprenant un joint articulé (7, 8 ; 15) pour monter le rétracteur de ceinture de siège (6).

8. Siège passager selon la revendication 7, dans lequel la plaque de montage (5 ; 16) comporte une série d'ouvertures pour le joint articulé (7, 8 ; 15) destinées à permettre une adaptation angulaire entre le rétracteur de ceinture de siège (6) et la plaque de montage (5 ; 16).

9. Siège passager selon l'une quelconque des revendications 1 à 8, dans lequel un cadre de l'appui-tête (4) est formé de manière à permettre le montage du rétracteur de ceinture de siège (6) et du plateau de guidage de ceinture (11) d'une façon uniforme sur les deux côtés du cadre.

10. Véhicule, en particulier pour le transport de masse de personnes, comprenant des sièges passagers selon les revendications 1 à 9.
